# EUROPÄISCHE PATENTSCHRIFT

(11) **EP 2 071 146 B1**
(45) Veröffentlichungstag und Bekanntmachung des Hinweises auf die Patenterteilung: **26.01.2011**
(21) Anmeldenummer: 08105796.0
(22) Anmeldetag: 14.11.2008
(51) Int. Cl.: F01N 3/20

(54) **Tankeinbaumodul und Verfahren zur Herstellung eines Tankeinbaumoduls**
Built-in module for a tank and method for producing a built-in module for a tank
Module à intégrer dans un réservoir et procédé de fabrication d'un module à intégrer dans un réservoir

(30) Priorität: 12.12.2007 DE 102007059849
(43) Veröffentlichungstag der Anmeldung: 17.06.2009
(73) Patentinhaber: Robert Bosch GmbH, 70442 Stuttgart (DE)
(72) Erfinder: Ulrich, Markus, 73635 Rudersberg (DE); Haeberer, Rainer, 75015 Bretten (DE); Horn, Matthias, 71691 Freiberg (DE)

(56) Entgegenhaltungen:
- EP-A- 1 752 762
- WO-A-2006/131201

## Beschreibung

### Stand der Technik

Die Erfindung betrifft ein Tankeinbaumodul nach dem Oberbegriff des Anspruchs 1 sowie ein Verfahren zu seiner Herstellung nach dem Oberbegriff des Anspruchs 10.

Für die selektive catalytic reduction (SCR) von Stickoxiden im Abgas von Verbrennungsmotoren in Kraftfahrzeugen wird flüssiges Reduktionsmittel in das Abgas eingesprüht. Das Reduktionsmittel zeichnet sich dadurch aus, dass es an einem SCR-Katalysator auch in sauerstoffreichem Abgas bevorzugt (das heißt selektiv) mit den Stickoxiden reagiert und diese dabei reduziert. Als Reduktionsmittel wird Ammoniak oder eine Ammoniak abspaltende Harnstoff-Wasser-Lösung verwendet. Das flüssige Reduktionsmittel wird in einem Tank gelagert und über eine Leitung zu einem Dosiermodul befördert, das zur Dosierung des Reduktionsmittels dient. Ein Reduktionsmitteltank mit einem Tankeinbaumodul nach dem Oberbegriff des Anspruchs 1 wird als bekannt vorausgesetzt.

Ein solches Tankeinbaumodul weist in der Regel mehrere, im Inneren des Reduktionsmitteltanks angeordnete elektrische Komponenten wie einen Füllstandssensor und/oder einen Temperatursensor und/oder eine elektrische Heizung auf, die elektrisch mit dem Steuergerät verbunden sind. Die elektrische Verbindung weist ein Kabel auf, das an die elektrische Komponente angeschlossen ist und aus dem Tankeinbaumodul herausführt.

Um einen Austritt von Reduktionsmittel durch Undichtigkeiten zu vermeiden, soll die Tankhülle in dem Bereich, der mit dem Reduktionsmittel in Berührung kommt, keine Durchbrüche (Öffnungen) aufweisen. Daher werden die elektrischen Anschlüsse der genannten Komponenten so angeordnet, dass sie im Luftvolumen oberhalb des Reduktionsmittels liegen. Die elektrischen Anschlusskabel durchdringen die Tankhülle zur Umgebung im oberen Bereich des Luftvolumens.

Ein unter dem Namen AdBlue bekanntes Reduktionsmittel gefriert unterhalb von -11 °C, wobei sich das Volumen um ca. 10% ausdehnt. Beim Gefrieren kann es zu Verformungen des Tanks kommen, die zu einer Längenänderung des Kabel zwischen seinem Tankhüllen-Durchdringungspunkt und der im Tankinneren angeordneten Komponente führen. Aus diesem Grunde werden die elektrischen Leitungen als flexible Leitungen ausgeführt, die eine Kompensation der Volumenausdehnung des Reduktionsmittels und einer daraus resultierenden Änderung der Tankform erlauben.

Die heutigen Reduktionsmittel, insbesondere Harnstoff-Wasser-Lösungen wie AdBlue sind korrosive Medien und daher nur in Verbindung mit speziellen Werkstoffen in Kraftfahrzeugen einsetzbar. Dabei haben sich aus der Gruppe metallischer Werkstoffe Austenite und hochlegierte Stähle (Edelstähle) als geeignet erwiesen, während Buntmetalle, unlegierte Stähle und Aluminium nicht ausreichend korrosionsbeständig sind und daher ausscheiden. Aus der Gruppe der Kunststoffe und Elastomere haben sich Polyamid und Polyethylen sowie Ethylen-Propylen-Dien-Kautschuk (Kurzbezeichnung EPDM) als vorteilhaft erwiesen, während Silikon, Fluorsilikon, NBR, und Viton ungeeignet sind.

Diese Korrosionsproblematik ist für Reduktionsmitteltanks charakteristisch, während beispielsweise die Tankfördereinheiten in Kraftfahrzeug-Diesel- oder Benzintanks von Kraftfahrzeugen nicht durch Korrosion gefährdet sind, da Diesel und Benzin nicht korrosiv wirken. Daher können dort auch für AdBlue ungeeignete Werkstoffe eingesetzt werden.

Nahezu alle elektrischen Komponenten eines Tankeinbaumoduls eines Reduktionsmitteltanks besitzen Teile die ohne einen Schutz vor der korrosiven Wirkung des Reduktionsmittels zersetzt werden würden. Als Beispiel wird auf ein Heizelement mit einem in einem Aluminiumkörper eingespanntem PTC-Heizelement verwiesen (PTC = positive temperature coefficient). Sowohl das PTC-Heizelement als auch der Aluminiumkörper würden im Reduktionsmittel nach kürzester Zeit korrodieren. Aus diesem Grunde werden diese Komponenten üblicherweise mit dem gegen Reduktionsmitteleinflüsse resistenten Polyamid umspritzt. Dabei ergeben sich jedoch weiter Probleme bei der Anbindung der flexiblen elektrischen Leitung an diese Komponente. Es besteht insbesondere die Gefahr, dass aufgrund einer Kapillarwirkung Reduktionsmittel in die elektrische Zuleitung gelangt und mit der Zeit sowohl die elektrische Zuleitung selbst als auch die angeschlossene Komponente und das Steuergerät durch das Reduktionsmittel geschädigt werden können.

### Offenbarung der Erfindung

Vor diesem Hintergrund besteht die Aufgabe der Erfindung in der Angabe eines Tankeinbaumoduls, bei dem diese Gefahr verringert ist. Mit anderen Worten: Die Aufgabe der Erfindung besteht in der Angabe eines Tankeinbaumoduls mit verbessertem Schutz seiner sensiblen Komponenten vor einer Berührung mit dem Reduktionsmittel. Mit Blick auf die Verfahrensaspekte der Erfindung besteht die Aufgabe in der Angabe eines Verfahrens zur Herstellung eines solchen Tankeinbaumoduls.

Diese Aufgabe wird jeweils mit den Merkmalen der unabhängigen Ansprüche gelöst.

Dadurch, dass der Leiter des Kabels an eine Anschlusslasche der Komponente angeschlossen ist und die Komponente zusammen mit der Anschlusslasche und einem Teilabschnitt des Kabels in ein einstückiges Kunststoffvolumen formschlüssig eingebettet ist, wird eine direkte Berührung der empfindlichen Komponente mit Reduktionsmittel verhindert. Darüber hinaus wird ein Eindringen des Reduktionsmittels in das Innere des Kabels weitestgehend verhindert, so dass auch eine Gefahr einer Berührung empfindlicher Teile der Komponente oder des Steuergeräts durch einen Reduktionsmitteltransport durch das Anschlusskabel, der durch eine Kapillarwirkung oder durch Diffusionseinflüsse angerieben wird, weitgehend ausgeschlossen oder zumindest stark verringert wird.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Reduktionsmitteltank eines Kraftfahrzeugs, in dem ein Tankeinbaumodul angeordnet ist;
- Fig. 2: einen Schnitt durch eine erste Ausgestaltung eines Tankeinbaumoduls; und
- Fig. 3: einen Schnitt durch eine zweite Ausgestaltung eines Tankeinbaumoduls.

Dabei bezeichnen gleiche Bezugszeichen jeweils gleiche Elemente.

### Ausführungsformen der Erfindung

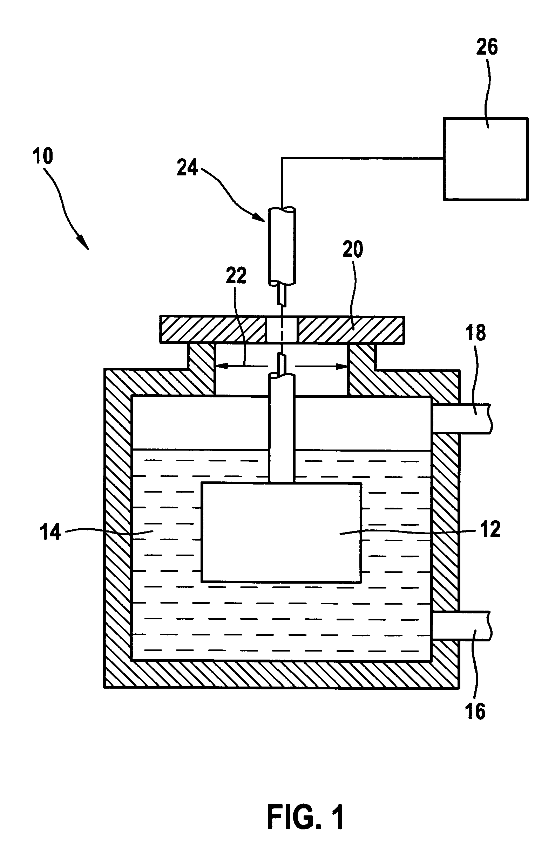

Im Einzelnen zeigt die Figur 1 einen Reduktionsmitteltank 10 eines Kraftfahrzeugs, in dem ein Tankeinbaumodul 12 angeordnet ist. Das Tankeinbaumodul 12 weist eine in seinem Inneren liegende elektrische Komponente auf und taucht bei gefülltem Reduktionsmitteltank 10 zumindest teilweise in das Reduktionsmittel 14 ein. Ausgestaltungen elektrischer Komponenten dienen als Füllstandssensor und/oder Temperatursensor und/oder als elektrische Heizung, wobei die Aufzählung nicht abschließend gemeint ist. Der Reduktionsmitteltank 10 weist einen Ablauf 16 auf, der zu einer Dosiereinrichtung, beispielsweise einem im Abgassystem eines Verbrennungsmotors liegenden Einspritzventil führt. Ferner weist der Tank 10 einen Zulauf 18 auf, über den der Tank 10 befüllt wird und/oder der mit einem Rücklauf verbunden ist, über den nicht eingespritztes Reduktionsmittel von der Dosiereinrichtung in den Reduktionsmitteltank 10 zurücklaufen kann.

Ein Deckel 20 verschließt im montierten Zustand eine Montageöffnung 22 im Tank 10, durch die das Tankeinbaumodul 12 bei seiner Montage in den Reduktionsmitteltank 10 eingeführt wird. Der Deckel 20 ist bevorzugt so angeordnet, dass er bei einem im Kraftfahrzeug montierten Reduktionsmitteltank 10 ein Luftvolumen abschließt, das sich bei der Füllung des Reduktionsmitteltanks 10 mit Reduktionsmittel 14 einstellt. Die Abdichtung des Deckels 20 gegenüber dem übrigen Reduktionsmitteltank 10 ist daher keinem hydrostatischen Druck des Reduktionsmittels 14 ausgesetzt.

Die elektrische Komponente ist über ein flexibles Kabel 24 an ein Steuergerät 26 angeschlossen, das die elektrische Komponente steuert oder Signale von ihr empfängt. Gesteuert wird zum Beispiel eine elektrische Heizung, während Sensoren Signale an das Steuergerät 26 liefern.

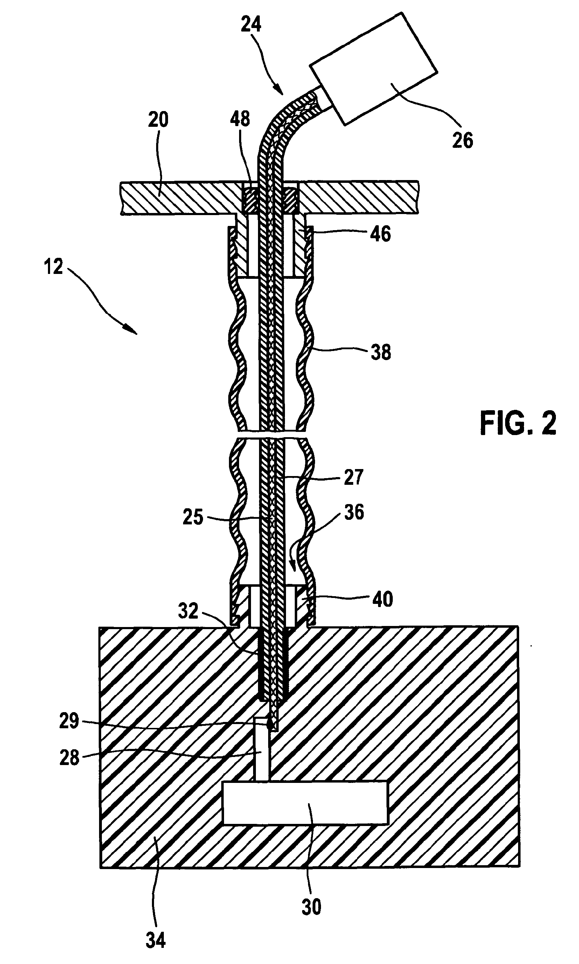

Figur 2 zeigt einen Schnitt durch eine erste Ausgestaltung eines Tankeinbaumoduls 12. Diese Ausgestaltung des Tankeinbaumoduls 12 zeichnet sich dadurch aus, dass ein Leiter 25 des Kabels 24 an eine Anschlusslasche 28 einer elektrischen Komponente 30 angeschlossen ist, wobei die Komponente 30 zusammen mit der Anschlusslasche 28 und einem Teilabschnitt 32 des Kabels 24 in ein einstückiges Kunststoffvolumen 34 formschlüssig eingebettet ist.

Das Kabel 24 besteht bevorzugt aus einer flexiblen Litze 25 aus Edelstahl als Leiter 25 und ist mit einer gegen das Reduktionsmittel 14 resistenten und flexiblen Kunststoffummantelung 27 versehen. Edelstahl als Material der flexiblen Litze 25 besitzt den Vorteil, dass die elektrische Verbindung auch dann nicht korrodiert, wenn die Dichtheit der Ummantelung 27 nachlässt, was z.B. durch mechanische Beschädigungen geschehen kann.

Die Lasche 28 besteht bevorzugt ebenfalls aus Edelstahl. Das Komponenten-seitige Ende der Litze 25 ist an die Lasche 28 mit einer Schweißstelle oder Lötstelle 29 verbunden.

Das einstückige Kunststoffvolumen 34 besteht bevorzugt aus einem gegen das Reduktionsmittel 14 resistenten Kunststoffmaterial wie Polyamid, Polyethylen oder Ethylen-Propylen-Dien-Kautschuk (EPDM). In einer bevorzugten Ausgestaltung besteht die Kunststoffummantelung 27 der Litze 25 des Kabels 24 aus dem gleichen Material wie das einstückige Kunststoffvolumen 34. Das Einbetten der mit der Anschlusslasche 28 an den Leiter 25 des Kabels 24 angeschlossenen elektrischen Komponente 30 erfolgt bei der Herstellung des Tankeinbaumoduls 12 bevorzugt durch Umspritzen, wobei die elektrische Komponente 30 zusammen mit der Anschlusslasche 28 und dem Teilabschnitt 32 des an die Lasche 28 angeschlossenen Kabels 24 mit aushärtendem Kunststoffmaterial umspritzt wird. Das aushärtende Kunststoffmaterial bildet das einstückige Kunststoffvolumen 34. Dabei ist bevorzugt, dass der Teilabschnitt 32 des Kabels 24 vor dem formschlüssigen Einbetten in das einstückige Kunststoffvolumen 34 erwärmt wird. In einer bevorzugten Ausgestaltung eines Herstellungsverfahrens erfolgt die Erwärmung mit einer offenen Flamme.

Durch das Umspritzen des Teilabschnitts 32 wird die Ummantelung 27 des Leiters über eine ausreichende Länge in die Polyamidumpritzung der elektrischen Komponente 30, also in das einstückige Kunststoffvolumen 34 mit einbezogen. Dabei führt die vor dem Umspritzen erfolgende Erwärmung des Teilabschnitts 32, die bevorzugt durch eine offene Flamme erfolgt, zu einer guten Verbindung des Ummantelung 27 mit dem umgespritzten Material, was bereits zu einer guten Abdichtung führt.

Zur weiteren Verbesserung der Abdichtung weist ein Bereich 36 des einstückigen Kunststoffvolumens 34, in dem das Kabel 24 aus dem Kunststoffvolumen 34 austritt, eine zusätzliche, redundante Abdichtung auf. Die zusätzliche Abdichtung weist in der Ausgestaltung der Figur 2 ein Rohr 38 und einen Kragen 40 auf. Das Rohr 38 ist formschlüssig mit dem Kragen 40 verbunden. Der Kragen 40 bildet einen Teil des Kunststoffvolumens 34 und umgibt eine Eintrittsstelle des Kabels 24 in das Kunststoffvolumen 34.

In einer bevorzugten Ausgestaltung erfolgt die formschlüssige Verbindung dadurch, dass der Kragen 40 ein Positiv oder ein Negativ eines Tannenbaumprofils (pine tree profile) aufweist und das Rohr 38 ein dazu komplementäres Gegenstück, also ein Negativ oder ein Positiv des Tannenbaumprofils aufweist. Dabei ist das Positiv oder Negativ des Kragens 40 und/oder das Gegenstück des Rohrs 38 bevorzugt elastisch und das Gegenstück ist so an das Positiv oder Negativ des Kragens 40 angepasst, dass es auf das Positiv oder Negativ aufschiebbar ist und im aufgeschobenen Zustand das Innere des Rohrs 38 gegen das Äußere des Rohrs 38 abdichtet. Der im Inneren des Reduktionsmitteltanks 10 verlaufende Teil des Kabels 24 verläuft bei dieser

Ausgestaltung vollständig innerhalb des an beiden Enden formschlüssig abgedichteten Rohrs 38. Dadurch wird dieser Teil des Kabels 24 gut vor Reduktionsmitteleinflüssen geschützt. Das Rohr 38 bildet insbesondere eine zusätzliche Abdichtung des Bereichs 36, in dem das Kabel 24 aus dem einstückigen Kunststoffvolumen 34 austritt.

Eine weitere bevorzugte Ausgestaltung sieht vor, dass das andere Ende des Rohrs 38 auf analoge Weise mit einem Kragen 46 verbunden ist, der einen Teil des Deckels 20 bildet und der die Öffnung 22 im Deckel 20 umgibt. Der Kragen 46 und das dem Deckel 20 zugewandte Ende des Rohrs 38 sind analog zur zueinander komplementären Ausgestaltung des Kragens 40 und des dem Kunststoffvolumen 34 zugewandten Ende des Rohrs 38 ebenfalls komplementär (das heißt als Positiv und Negativ) ausgestaltet, so dass das Rohr 38 im montierten Zustand formschlüssig und dicht mit dem Kragen 46 verbunden ist.

Die ummantelte Edelstahllitze 25 wird am Steuergerät-seitigen Ausgang aus dem Wellrohr 38 über eine an sich bekannte Einzeladerabdichtung 48 nach außen abgedichtet. Durch dieses redundante Abdichtsystem hat das Reduktionsmittel 14 keine Chance, in die Komponente 30 oder in das Steuergerät 26 einzudringen.

Um einen Längenausgleich zu ermöglichen, ist das Rohr 38 bevorzugt als Wellrohr ausgestaltet. Als Material für das Wellrohr 38 kommt im Prinzip jeder elastische und gegen das Reduktionsmittel 14 beständige Kunststoff in Frage. Diese Anforderung wird zum Beispiel durch Polyamid erfüllt.

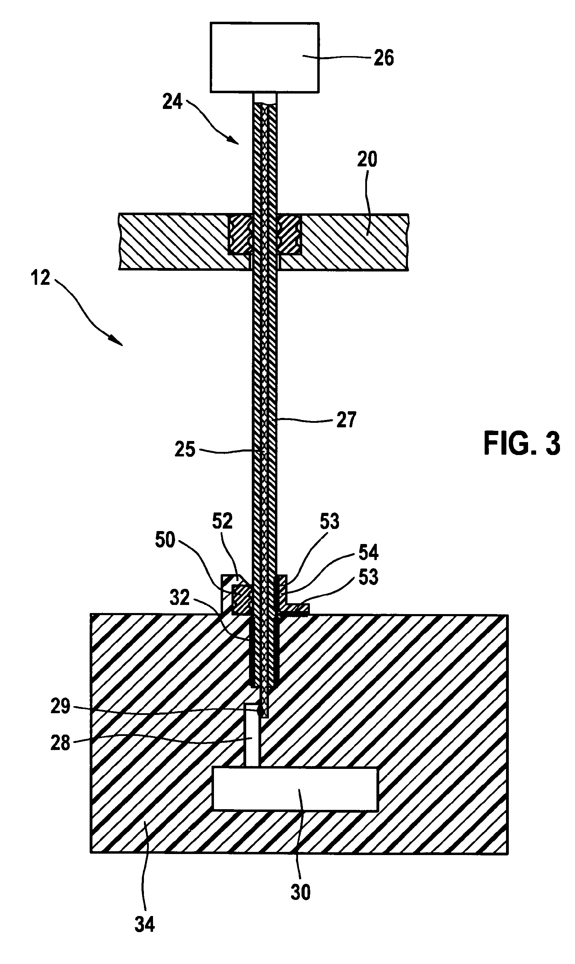

Bei der in der Fig. 3 vorgestellten Ausgestaltung hat man auf das Wellrohr 38 als redundante Abdichtung verzichtet, was durch konstruktive Gegebenheiten erforderlich sein kann. Bei dieser Variante wird die Ummantelung 27 der Edelstahllitze 25 beim Austritt aus der mit Reduktionsmittel-resistentem Kunststoffmaterial 34 umspritzten Komponente 30 mit einer zusätzlichen redundanten Dichtung versehen. Eine erste Möglichkeit zur Realisierung einer solchen redundanten Dichtung ist eine zusätzliche radial abdichtende Einzeladerabdichtung 50 aus dem Elastomer EPDM. Diese wird bei der Herstellung des Tankeinbaumoduls 12 durch plastischen Umformen eines Kragens 52 in axialer Richtung formschlüssig fixiert. Dies ist in der linken Hälfte der Fig. 3 dargestellt. Die Einzeladerabdichtung 50 füllt einen Zwischenraum zwischen der Ummantelung 27 und dem die Ummantelung 27 umlaufenden, mit dem Kunststoffvolumen 34 einstückigen Kragen 52 in radialer Richtung aus und wird in axialer Richtung durch eine zur Ummantelung 27 gerichtete Einwölbung des Kragens 52 gehalten.

Eine weitere Möglichkeit zur redundanten Abdichtung besteht in einer Laserverschweißung 53 des Kunststoffvolumens 34 mit dem Material der Ummantelung 27. Dies erfolgt in einer Ausgestaltung mit Hilfe eines Winkelstückes 54 als Kunststoffdichtkörper, das aus dem Material der Ummantelung 27 und des Kunststoffvolumens 34 besteht. Dies ist in der rechten Hälfte der Fig. 3 dargestellt.

## Patentansprüche

1. Tankeinbaumodul (12) eines Reduktionsmitteltanks (10) eines Kraftfahrzeugs, welches Tankeinbaumodul (12) eine elektrische Komponente (30) und ein Kabel (24) aufweist, das an die elektrische Komponente (30) angeschlossen ist und aus dem Tankeinbaumodul (10) herausführt, **dadurch gekennzeichnet, dass** ein Leiter (25) des Kabels (24) an eine Anschlusslasche (28) der Komponente (30) angeschlossen ist, die Komponente (30) zusammen mit der Anschlusslasche (28) und einem Teilabschnitt (32) des Kabels (24) in ein einstückiges Kunststoffvolumen (34) formschlüssig eingebettet ist, und ein Bereich (36), in dem das Kabel (24) aus dem Kunststoffvolumen austritt (34), eine zusätzliche Abdichtung aufweist, wobei die zusätzliche Abdichtung einen mit dem Kunststoffvolumen einstückigen Kragen (40) sowie ein mit dem Kragen (40) formschlüssig gekoppeltes Rohr (38) aufweist.

2. Tankeinbaumodul (12) nach Anspruch 1, **dadurch gekennzeichnet, dass** das Kunststoffvolumen (34) aus einem gegen Ammoniak resistenten Kunststoffmaterial besteht.

3. Tankeinbaumodul (12) nach Anspruch 2, **gekennzeichnet, durch** Polyamid, Polyethylen oder Ethylen-Propylen-Dien-Kautschuk als Kunststoffmaterial.

4. Tankeinbaumodul (12) nach einem der vorhergehenden Ansprüche, **gekennzeichnet durch** eine Edelstahllitze als Leiter (25) und eine aus Edelstahl bestehende Anschlusslasche (28).

5. Tankeinbaumodul (12) nach einem der vorhergehenden Ansprüche, **dadurch gekennzeichnet, dass** das Kabel (24) eine Ummantelung (27) des Leiters (25) aufweist, die aus Polyamid, Polyethylen oder Ethylen-Propylen-Dien-Kautschuk besteht.

6. Tankeinbaumodul (12) nach einem der vorhergehenden Ansprüche, **dadurch gekennzeichnet, dass** der Kragen (40) die Ummantelung (27) des Leiters (25) umläuft und ein Positiv oder ein Negativ eines Tannenbaumprofils aufweist und dass das Rohr (38) ein Gegenstück des Positivs oder des Negativs des Tannenbaumprofils aufweist, wobei das Positiv oder das Negativ und/oder das Gegenstück elastisch ist und wobei das Gegenstück so an das Positiv oder Negativ angepasst ist, dass es auf das Positiv oder Negativ aufschiebbar ist und im aufgeschobenen Zustand das Innere des Rohrs (38) gegen das Äußere des Rohrs (38) abdichtet.

7. Tankeinbaumodul (12) nach Anspruch 5, **dadurch gekennzeichnet, dass** der mit einer gegen Ammoniak resistenten Kunststoffummantelung (27) ummantelte Leiter (25) beim Austritt aus dem Kunststoffvolumen (34) eine zusätzliche Dichtung aufweist.

8. Tankeinbaumodul (12) nach Anspruch 7, **dadurch gekennzeichnet, dass** die zusätzliche Dichtung aus einem mit der Ummantelung (27) und dem Kunststoffvolumen (34) verschweißten Kunststoffdichtkörper (54) besteht.

9. Tankeinbaumodul (12) nach Anspruch 7, **dadurch gekennzeichnet, dass** die zusätzliche Dichtung eine radial abdichtende Einzeladerabdichtung (50) aus Ethylen-Propylen-Dien-Kautschuk aufweist, die einen Zwischenraum zwischen der Ummantelung (27) und einem die Ummantelung (27) umlaufenden, mit dem Kunststoffvolumen (34) einstückigen Kragen in radialer Richtung ausfüllt und die in axialer Richtung durch eine zur Ummantelung (27) gerichtete Einwölbung des Kragens (52) gehalten wird.

10. Verfahren zur Herstellung eines Tankeinbaumoduls (12) eines Reduktionsmitteltanks (10) eines Kraftfahrzeugs, das eine elektrische Komponente (30) und ein Kabel (24) aufweist, das an die elektrische Komponente (30) angeschlossen ist und aus dem Tankeinbaumodul (12) herausführt, **dadurch gekennzeichnet, dass** ein Leiter (25) des Kabels (24) an eine Anschlusslasche (28) der Komponente (30) angeschlossen wird, die Komponente (30) zusammen mit der Anschlusslasche (28) und einem Teilabschnitt (32) des Kabels (24) in ein einstückiges Kunststoffvolumen (34) formschlüssig eingebettet wird, und ein Bereich (36), in dem das Kabel (24) aus dem Kunststoffvolumen (34) austritt, mit einer zusätzlichen Abdichtung abgedichtet wird, wobei das Einbetten durch Umspritzen mit aushärtendem Kunststoffmaterial erfolgt, wobei die zusätzliche Abdichtung einen mit dem Kunststoffvolumen einstückigen Kragen (40) sowie ein mit dem Kragen (40) formschlüssig gekoppeltes Rohr (38) aufweist.

11. Verfahren zur Herstellung eines Tankeinbaumoduls (12) nach Anspruch 10, **dadurch gekennzeichnet, dass** der Teilabschnitt (32) des Kabels (24) vor dem formschlüssigen Einbetten in das einstückige Kunststoffvolumen (34) erwärmt wird.

## Claims

1. In-tank module (12) of a reducing agent tank (10) of a motor vehicle, which in-tank module (12) has an electrical component (30) and a cable (24) which is connected to the electrical component (30) and leads out of the in-tank module (12), **characterized in that** a conductor (25) of the cable (24) is connected to a terminal lug (28) of the component (30), the component (30) together with the terminal lug (28) and a partial section (32) of the cable (24) is embedded in a positively locking fashion into a single-piece plastic volume (34), and a region (36) in which the cable (24) emerges from the plastic volume (34) has an additional seal, with the additional seal having a collar (40) which is in one piece with the plastic volume and also a pipe (38) which is coupled in a positively locking fashion to the collar (40).

2. In-tank module (12) according to Claim 1, **characterized in that** the plastic volume (34) is composed of an ammonia-resistant plastic material.

3. In-tank module (12) according to Claim 2, **characterized by** polyamide, polyethylene or ethylene-propylene-diene rubber as plastic material.

4. In-tank module (12) according to one of the preceding claims, **characterized by** a high-grade steel wire as a conductor (25) and a terminal lug (28) composed of high-grade steel.

5. In-tank module (12) according to one of the preceding claims, **characterized in that** the cable (24) has a sheathing (27) of the conductor (25), which sheathing (27) is composed of polyamide, polyethylene or ethylene-propylene-diene rubber.

6. In-tank module (12) according to one of the preceding claims, **characterized in that** the collar (40) runs around the sheathing (27) of the conductor (25) and has a positive or a negative of a fir-tree profile and **in that** the pipe (38) has a counterpart of the positive or negative of the fir-tree profile, with the positive or the negative and/or the counterpart being elastic, and with the counterpart being matched to the positive or negative in such a way that it can be pushed onto the positive or negative and, when pushed on, seals off the inside of the pipe (38) with respect to the outside of the pipe (38).

7. In-tank module (12) according to Claim 5, **characterized in that** the conductor (25) which is encased with an ammonia-resistant plastic sheathing (27) has an additional seal where it emerges from the plastic volume (34).

8. In-tank module (12) according to Claim 7, **characterized in that** the additional seal is composed of a plastic sealing body (54) which is fused to the sheathing (27) and to the plastic volume (34).

9. In-tank module (12) according to Claim 7, **characterized in that** the additional seal has a radially sealing single-strand seal (50) composed of ethylene-propylene-diene rubber, which single-strand seal (50) fills in the radial direction an intermediate space between the sheathing (27) and a collar which runs around the sheathing (27) and which is in one piece with the plastic volume (34), and which single-strand seal (50) is held in the axial direction by an inwardly bulged portion, which is directed towards the sheathing (27), of the collar (52).

10. Method for producing an in-tank module (12) of a reducing agent tank (10) of a motor vehicle, which in-tank module (12) has an electrical component (30) and a cable (24) which is connected to the electrical component (30) and leads out of the in-tank module (12), **characterized in that** a conductor (25) of the cable (24) is connected to a terminal lug (28) of the component (30), the component (30) together with the terminal lug (28) and a partial section (32) of the cable (24) is embedded in a positively locking fashion into a single-piece plastic volume (34), and a region (36) in which the cable (24) emerges from the plastic volume (34) is sealed off by means of an additional seal, with the embedding taking place by extrusion coating with setting plastic material, the additional seal having a collar (40) which is in one piece with the plastic volume and also having a pipe (38) which is coupled in a positively locking fashion to the collar (40).

11. Method for producing an in-tank module (12) according to Claim 10, **characterized in that** the partial section (32) of the cable (24) is heated before being embedded in a positively locking fashion into the single-piece plastic volume (34).

## Revendications

1. Module à intégrer dans un réservoir (12) d'un réservoir d'agent réducteur (10) d'un véhicule automobile, lequel module à intégré dans un réservoir (12) présentant un composant électrique (30) et un câble (24), qui est raccordé au composant électrique (30) et qui sort du module à intégrer dans un réservoir (12), **caractérisé en ce qu'**un conducteur (25) du câble (24) est raccordé à une languette de raccordement (28) du composant (30), le composant (30), conjointement avec la languette de raccordement (28) et une portion partielle (32) du câble (24), est encastré par engagement par correspondance géométrique dans un volume en plastique d'une seule pièce (34), et une région (36), dans laquelle le câble (24) sort du volume en plastique (34), présente une étanchéité supplémentaire, l'étanchéité supplémentaire présentant un rebord (40) d'une seule pièce avec le volume en plastique ainsi qu'un tube (38) accouplé par engagement par correspondance géométrique avec le rebord (40).

2. Module à intégrer dans un réservoir (12) selon la revendication 1, **caractérisé en ce que** le volume en plastique (34) se compose d'un matériau en plastique résistant à l'ammoniaque.

3. Module à intégrer dans un réservoir (12) selon la revendication 2, **caractérisé en ce que** le matériau en plastique est du polyamide, du polyéthylène, ou un caoutchouc éthylène-propylène-diène.

4. Module à intégrer dans un réservoir (12) selon l'une quelconque des revendications précédentes, **caractérisé par** un toron en acier spécial servant de conducteur (25) et une languette de raccordement (28) en acier spécial.

5. Module à intégrer dans un réservoir (12) selon l'une quelconque des revendications précédentes, **caractérisé en ce que** le câble (24) présente une gaine (27) du conducteur (25), qui se compose de polyamide, de polyéthylène, ou d'un caoutchouc éthylène-propylène-diène.

6. Module à intégrer dans un réservoir (12) selon l'une quelconque des revendications précédentes, **caractérisé en ce que** le rebord (40) s'étend tout autour de la gaine (27) du conducteur (25) et présente une forme positive ou négative d'un profilé en sapin de Noël, et **en ce que** le tube (38) présente une pièce conjuguée de la forme positive ou négative du profilé en sapin de Noël, la forme positive ou négative et/ou la pièce conjuguée étant élastiques et la pièce conjuguée étant adaptée à la forme positive ou négative de telle sorte qu'elle puisse être poussée sur la forme positive ou négative, et que dans l'état poussé, elle ferme l'intérieur du tube (38) hermétiquement contre l'extérieur du tube (38).

7. Module à intégrer dans un réservoir (12) selon la revendication 5, **caractérisé en ce que** le conducteur (25) enveloppé d'une gaine en plastique (27) résistant à l'ammoniaque présente à la sortie du volume en plastique (34) un joint d'étanchéité supplémentaire.

8. Module à intégrer dans un réservoir (12) selon la revendication 7, **caractérisé en ce que** le joint d'étanchéité supplémentaire se compose d'un corps d'étanchéité en plastique (54) soudé à la gaine (27) et au volume en plastique (34).

9. Module à intégrer dans un réservoir (12) selon la revendication 7, **caractérisé en ce que** le joint d'étanchéité supplémentaire présente une étanchéité de fils individuels (50) à étanchéité radiale en caoutchouc éthylène-propylène-diène, qui remplit un espace intermédiaire entre la gaine (27) et un rebord entourant la gaine (27), réalisé d'une seule pièce avec le volume en plastique (34), et qui est maintenue dans la direction axiale par une courbure du rebord (52) orientée vers la gaine (27).

10. Procédé de fabrication d'un module à intégrer dans un réservoir (12) d'un réservoir d'agent réducteur (10) d'un véhicule automobile, qui présente un composant électrique (30) et un câble (24), qui est raccordé au composant électrique (30) et qui sort du module à intégrer dans un réservoir (12), **caractérisé en ce qu'**un conducteur (25) du câble (24) est raccordé à une languette de raccordement (28) du composant (30), le composant (30), conjointement avec la languette de raccordement (28) et une portion partielle (32) du câble (24), est encastré par engagement par correspondance géométrique dans un volume en plastique d'une seule pièce (34), et une région (36), dans laquelle le câble (24) sort du volume en plastique (34), est rendue étanche par une étanchéité supplémentaire, l'encastrement s'effectuant par surmoulage avec un matériau en plastique durcissable, l'étanchéité supplémentaire présentant un rebord (40) d'une seule pièce avec le volume en plastique ainsi qu'un tube (38) accouplé par engagement par correspondance géométrique avec le rebord (40).

11. Procédé de fabrication d'un module à intégrer dans un réservoir (12) selon la revendication 10, **caractérisé en ce que** la portion partielle (32) du câble (24) est chauffée avant son encastrement par engagement par correspondance géométrique dans le volume en plastique d'une seule pièce (34).
